# DEMANDE DE BREVET EUROPEEN

(11) **EP 1 248 062 A1**
(43) Date de publication de la demande: **09.10.2002**
(21) Numéro de dépôt: 02370011.5
(22) Date de dépôt: 05.04.2002
(51) Int. Cl.: F28B 1/02, F28B 9/08, A21B 3/04

(54) **Condenseur de vapeur d'eau**

(30) Priorité: 06.04.2001 FR 0104697
(71) Demandeur: EUROFOURS Société Anonyme dite:, F-59144 Gommegnies (FR)
(72) Inventeur: LANCELOT, Pierre, B 7387 HONNELLES (BE)
(74) Mandataire: Hennion, Jean-Claude

(57) **Abrégé**

L'invention concerne un condenseur (8) de la vapeur d'eau provenant d'une canalisation de raccordement (6) ainsi qu'un four de cuisson (1), notamment four industriel de boulangerie, équipé d'un tel condenseur (8). Ce condenseur (8) comprend :
a) une cuve (9) isolée thermiquement et remplie d'un liquide réfrigéré (13) par un circuit de refroidissement (14), celui-ci étant raccordé à un groupe frigorifique (15) et
b) une conduite de condensation (16) qui est partiellement immergée dans le liquide réfrigéré (13), dont la première extrémité (16a) est raccordée à la canalisation de raccordement (6), dont la seconde extrémité (16b) est raccordée à un moyen d'aspiration (17) et dont la partie dite de fond (16a), qui est située au plus bas dans la cuve (9), est équipée d'une purge d'évacuation (19) des condensats.

## Description

La présente invention concerne un condenseur de vapeur d'eau. Elle concerne également un four de cuisson, notamment un four industriel destiné à la boulangerie, qui est équipé d'un condenseur de la vapeur d'eau produite lors de la cuisson.

La pâte que place le boulanger dans son four, pour produire son pain, contient une proportion importante d'eau , sans doute de l'ordre du tiers de son poids. Lors de la cuisson, cette eau s'évapore en partie dans l'enceinte du four et la vapeur d'eau ainsi produite n'est pas évacuée mais séjourne dans l'enceinte du four, créant une atmosphère propice à la cuisson, jusqu'à la fin de celle-ci. Lors de l'ouverture de la porte du four, l'air saturé en vapeur d'eau contenu dans l'enceinte s'échappe dans la pièce dans laquelle se trouve le four, ce qui a pour effet de provoquer une forte condensation de la vapeur d'eau sur certaines parois froides, notamment vitres, glaces...

Pour éviter cet échappement à l'intérieur de la pièce , les fours industriels de boulangerie comportent une canalisation de raccordement, dénommée oura , qui permet le branchement de l'enceinte du four sur une cheminée d'évacuation de la vapeur d'eau. Cette canalisation est munie d'un moyen de fermeture de sorte que l'enceinte n'est raccordée à la cheminée qu'après la fin de la cuisson, pendant un temps suffisant pour permettre l'évacuation de la vapeur d'eau, et avant l'ouverture de la porte du four.

Il faut donc que la pièce qui contient le four soit équipée d'une cheminée sur laquelle peut être branchée la canalisation de raccordement. Il faut également que cette cheminée soit suffisamment ventilée pour permettre une évacuation optimale de la vapeur d'eau dans un laps de temps le plus court possible afin d'éviter l'immobilisation du four en fin de cuisson, avant l'ouverture de la porte.

Le four de cuisson, notamment de boulangerie , de la présente invention , ne nécessite pas la mise en oeuvre d'une cheminée d'évacuation de la vapeur d'eau produite lors de la cuisson, puisqu'il est équipé d'un condenseur de ladite vapeur d'eau , branché sur la canalisation de raccordement du four .

Même s'il est particulièrement avantageux en liaison avec un four de cuisson et notamment un four industriel de boulangerie, le condenseur de l'invention trouve son application toutes les fois où un volume donné d'air chaud saturé en vapeur d'eau doit être évacué rapidement d'une enceinte , par exemple avant l'ouverture de la porte de l'enceinte , et condensée.

On connaît déjà par le document DE 3715132 un condenseur de la vapeur d'eau provenant d'une canalisation de raccordement qui comprend une cuve isolée thermiquement et remplie d'un liquide de refroidissement et une conduite de condensation qui est immergée dans le liquide de refroidissement et dont la première extrémité est raccordée à la canalisation de raccordement.

Cependant le liquide de refroidissement est un bain circulant d'eau froide , dont il faut régler le débit de manière continue ou séquentielle pour obtenir une température constante , ce qui est consommateur d'eau et entraîne des variations en fonction de la température de l'eau d'alimentation. De plus la cuve est entourée d'une chemise , dans laquelle débouche l'extrémité inférieure de la conduite de condensation. Cette chemise isole thermiquement la cuve, mais avec une efficacité réduite du fait qu'elle est parcourue par les vapeurs encore chaudes et non condensées sortant de la conduite de condensation.

La présente invention pallie à ces inconvénients .

Elle concerne un condenseur du type connu par le document DE.3715132, dans lequel, de manière caractéristique :
a) le liquide de refroidissement est un liquide réfrigéré par un circuit de refroidissement placé dans la cuve et raccordé à un groupe frigorifique,
b) la seconde extrémité de la conduite de condensation est raccordée à un moyen d'aspiration et
c) la partie dite de fond de la conduite de condensation , qui est située au plus bas dans la cuve, est équipée d'une purge d'évacuation des condensats.

Ainsi l'atmosphère saturée en vapeur d'eau qui provient de la canalisation de raccordement est contrainte à se déplacer vers la seconde extrémité de la conduite de condensation grâce au moyen d'aspiration. Lors de son transfert de la première extrémité vers la seconde extrémité de ladite conduite de condensation, la vapeur d'eau est soumise à l'action du liquide qui est réfrigéré à une température déterminée grâce au circuit de refroidissement et au groupe frigorifique. La vapeur d'eau se condense à l'intérieur de la conduite de condensation et l'eau ainsi produite tombe par gravité dans la partie de fond de la conduite de condensation et s'écoule par la purge d'évacuation.

Dans une variante de réalisation, la cuve, isolée thermiquement , est munie d'un couvercle à travers lequel débouche la seconde extrémité de la conduite de condensation ; de plus un ventilateur est monté sur le couvercle au droit de cette seconde extrémité. Dans cette disposition particulière, le couvercle contribue à l'isolation thermique de la cuve et l'ensemble cuve/moyen d'aspiration/groupe frigorifique peut constituer un ensemble compact d'encombrement réduit, très facilement adaptable notamment à proximité d'un four de boulangerie.

De préférence, la conduite de condensation , à l'intérieur de la cuve a un parcours sensiblement rectiligne en amont de la partie de fond et jusqu'à proximité de celle-ci.

De préférence également, la conduite de condensation a , à I' intérieur de la cuve , un parcours en forme de serpentin depuis la partie de fond jusqu'à la seconde extrémité.

Le groupe frigorifique et le circuit de refroidissement sont prévus pour que la température du liquide réfrigéré à l'intérieur de la cuve soit de l'ordre de 8 à 12°C, de préférence 10°C.

La présente invention a aussi pour objet un four de cuisson, notamment de boulangerie , qui est équipé d'un condenseur de vapeur d'eau, ayant les caractéristiques précitées . Ce four possède une canalisation de raccordement pourvue d'un clapet obturateur, et c'est donc, en fin de cuisson, après ouverture du clapet obturateur, que l'atmosphère saturée en vapeur d'eau qui se trouve dans l'enceinte du four est contrainte à se déplacer dans la conduite de condensation grâce à l'action du moyen d'aspiration.

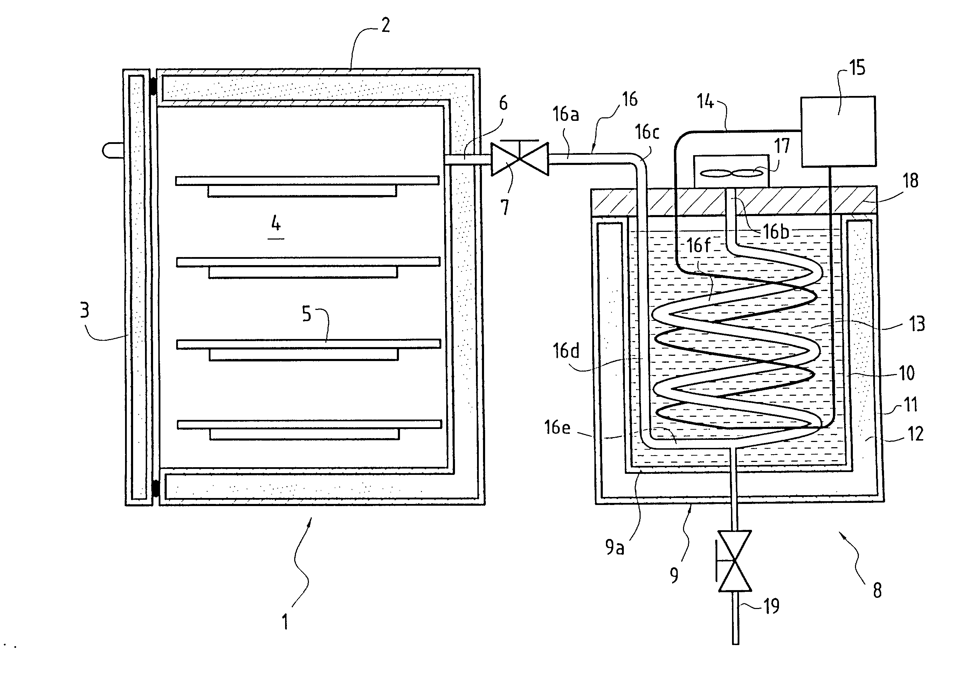

La présente invention sera mieux comprise à la lecture de la description qui va être faite d'un exemple préféré de réalisation d'un four industriel de boulangerie équipé d'un condenseur, illustré par le dessin annexé dans lequel la figure unique est une représentation schématique simplifiée du four et de son condenseur.

Le four 1 est un four traditionnel de boulangerie avec son châssis 2 fermé par la porte 3, qui délimite l'enceinte 4 à l'intérieur de laquelle est réalisée la cuisson des pains entreposés sur plusieurs niveaux délimités par des plaques de cuisson 5. Sur l'arrière du châssis 2 est prévue une canalisation de raccordement 6 entre l'enceinte 4 et l'extérieur , apte à être fermée par un clapet 7, l'ensemble constitué par la canalisation et le clapet étant souvent dénommé oura.

Selon l'invention, le four 1 est équipé d'un condenseur 8 . Ce condenseur est conçu de manière à permettre l'extraction rapide de l'air saturé de vapeur d'eau , à haute température , séjournant à l'intérieur de l'enceinte 4 pendant l' opération de cuisson et la récupération de cette vapeur d'eau sous forme de condensat.

Le condenseur 8 comprend une cuve 9 qui est isolée thermiquement. Il peut s'agir notamment d'une cuve à double paroi 10,11 entre lesquelles parois est disposé un matériau isolant 12.

Cette cuve 9 est remplie d'un liquide 13 qui est refroidi par un circuit de refroidissement 14 lui-même raccordé à un groupe frigorifique 15. Il n'est pas besoin de décrire plus avant ce groupe frigorifique qui est connu par ailleurs. Il peut par exemple s'agir d'un groupe ayant une puissance de l'ordre de 2000 W pour permettre de porter le liquide réfrigéré 13 à une température de l'ordre de 10°C, grâce au liquide caloporteur circulant dans le circuit de refroidissement 14, lequel plonge dans le liquide réfrigéré 13. Le circuit de refroidissement 14 a de préférence la forme d'un serpentin pour obtenir un refroidissement homogène du liquide 13 dans tout le volume intérieur de la cuve 9.

Le condenseur 8 comprend également une conduite de condensation 16 dont la première extrémité 16a est branchée sur la canalisation de raccordement 6, sortant du four 1. Quant à la seconde extrémité 16b de la conduite de condensation, elle est raccordée à un moyen d'aspiration qui en l'occurrence est un ventilateur 17. Ce ventilateur 17 a pour fonction de créer un appel d'air à travers toute la conduite de condensation 16, depuis sa seconde extrémité 16b jusqu'à sa première extrémité 16a.

Ce ventilateur 17 est, dans l'exemple illustré , monté sur une plaque 18 faisant office de couvercle de la cuve 9. La seconde extrémité 16b de la conduite de condensation 16 débouche à travers ladite plaque 18 pour être en regard de la zone d'aspiration du ventilateur 17.

La conduite de condensation 16 présente, en aval de sa première extrémité 16a une partie coudée 16c puis une partie rectiligne 16d qui s'étend sensiblement verticalement jusqu'à une partie de fond 16e qui se trouve dans la partie basse 9a de la cuve 9. En aval de cette partie de fond 16e, la conduite de condensation 16 a une forme en serpentin 16f qui remonte jusqu'à la seconde extrémité 16b débouchant hors de la plaque 18.

La partie de fond 16e de la conduite de condensation est pourvue d'une purge d'évacuation 19 qui traverse, de manière étanche, les deux parois 10,11 de la cuve 9.

Pendant le fonctionnement du four 1, le groupe frigorifique 15 est mis en route de manière à ce que le liquide réfrigéré 13 soit à une température suffisamment basse pour obtenir la condensation de la vapeur d'eau circulant dans la conduite de condensation 16. Une température de l'ordre de 8 à 12°C est adéquate.

Pendant toute l'opération de cuisson, le clapet 7 obture la canalisation de raccordement 6. Une fois la cuisson terminée , ce clapet 7 est ouvert et simultanément le ventilateur 17 est mis en route. L'air chaud et saturé en vapeur d'eau séjournant dans l'enceinte 4 est forcé à se déplacer vers la seconde extrémité 16b de la conduite de condensation sous l'effet du phénomène d'aspiration généré par l'aspirateur 17. Pendant son déplacement dans la conduite de condensation 16, cet air chaud et saturé en vapeur d'eau est soumis à un refroidissement brutal lorsque la conduite de condensation 16 plonge dans le liquide réfrigéré 13. Dès son déplacement dans la partie rectiligne 16d il se crée déjà une condensation de la vapeur d'eau, condensation qui peut se poursuivre dans la partie de fond 16e et dans la partie en serpentin 16f de la conduite de condensation. L'eau condensée ou condensat retombe par gravité le long de la paroi interne de la conduite de condensation 16 jusqu'à la purge 19 d'où elle est évacuée.

La puissance du groupe frigorifique 15, la température du liquide réfrigéré 13, la puissance du ventilateur 17, la contenance de la cuve 9 et le diamètre de la conduite de condensation sont entre autres des paramètres qui sont déterminés en sorte que l'air s'échappant de la zone de refoulement du ventilateur 17 soit sensiblement exempt de vapeur d'eau , la quasi-totalité de la vapeur d'eau contenue dans l'air extrait de l'enceinte 4 étant condensée et évacuée du condenseur 8 au niveau de la purge 19. Ces paramètres sont également déterminés en sorte que cette opération de condensation soit réalisée dans un temps court de manière à permettre l'ouverture rapide du four après la fin de la cuisson afin de limiter le temps d'immobilisation du four.

Dans un mode précis de réalisation, la cuve 9 a une contenance de 100 à 300 litres de liquide réfrigéré et la conduite de condensation a un diamètre de l'ordre de 80 à 150mm, tandis que le diamètre de la purge d'évacuation des condensats est de l'ordre de 8 à 15mm. A cet égard , il importe que le diamètre de cette purge ne soit pas trop important pour éviter des fuites éventuelles de vapeur d'eau non encore condensée. Etant donné que le four , notamment de boulangerie, est soumis à des cycles de cuisson répétés au cours de la journée, la puissance du groupe frigorifique et la température basse du liquide réfrigéré sont déterminées en sorte que le fonctionnement continu du groupe frigorifique pendant un cycle donné de cuisson permette de compenser l'augmentation de température due au cycle précédent de condensation. Il est donc possible de mettre en oeuvre un groupe frigorifique de faible puissance.

## Revendications

1. Condenseur de la vapeur d'eau provenant d'une canalisation de raccordement comprenant une cuve isolée thermiquement et remplie d'un liquide de refroidissement et une conduite de condensation immergée dans le liquide de refroidissement , dont la première extrémité (16a) est raccordée à la canalisation de raccordement (6), **caractérisé en ce que** le liquide de refroidissement est un liquide réfrigéré (13) par un circuit de refroidissement (14), placé dans la cuve et raccordé à un groupe frigorifique (15), **en ce que** la seconde extrémité (16b) de la conduite de condensation est raccordée à un moyen d'aspiration (17) et **en ce que** la partie dite de fond (16e), de la conduite de condensation, qui est située au plus bas dans la cuve (9) , est équipée d'une purge d'évacuation (19) des condensats.

2. Condenseur selon la revendication 1 **caractérisé en ce que** la cuve (9), isolée thermiquement , est munie d'un couvercle (18) à travers lequel débouche la seconde extrémité (16b) de la conduite de condensation (16) et **en ce que** le moyen d'aspiration (17) est monté sur le couvercle (18) au droit de cette seconde extrémité (16b).

3. Condenseur selon l'une des revendications 1 ou 2 **caractérisé en ce que** la conduite de condensation (16), à l'intérieur de la cuve (9) a un parcours sensiblement rectiligne en amont de la partie de fond (16e) et jusqu'à proximité de celle-ci.

4. Condenseur selon la revendication 3 **caractérisé en ce que** la conduite de condensation (16) a , à l'intérieur de la cuve (9), un parcours en forme de serpentin depuis la partie de fond (16e) jusqu'à la seconde extrémité (16b).

5. Condenseur selon l'une des revendications 1 à 4 **caractérisé en ce que** le groupe frigorifique (15) et le circuit de refroidissement (14) sont prévus pour que la température du liquide réfrigéré (13) à l'intérieur de la cuve soit de l'ordre de 8 à 12°C, de préférence 10°C.

6. Four de cuisson (1), notamment four industriel de boulangerie, comportant une canalisation de raccordement (6) équipée d'un clapet obturateur (7), **caractérisé en ce que** ladite canalisation (6) est branchée sur un condenseur (8) selon l'une des revendications 1 à 5.

7. Four selon la revendication 6 **caractérisé en ce que** la puissance du groupe frigorifique et la température basse du liquide réfrigéré sont déterminées en sorte que le fonctionnement continu du groupe frigorifique pendant un cycle de cuisson permette de compenser l'augmentation de température due au cycle précédent de condensation.
